# EUROPEAN PATENT SPECIFICATION

(11) **EP 1 642 518 B1**
(45) Date of publication and mention of the grant of the patent: **28.02.2007**
(21) Application number: 05004247.2
(22) Date of filing: 26.02.2005
(51) Int. Cl.: A47J 36/16, A47J 43/044, A47J 43/07

(54) **A domestic making appliance for preparing porridges**
Haushaltsgerät zur Zubereitung von Brei
Appareil ménager pour la préparation de bouillie

(30) Priority: 01.10.2004 KR 2004078198
(43) Date of publication of application: 05.04.2006
(73) Proprietor: Kim, Hong-bae, Koyang-si Kyonggi-do 412-190 (KR)
(72) Inventor: Kim, Hong-bae, Koyang-si Kyonggi-do 412-190 (KR)
(74) Representative: Fuchs Mehler Weiss & Fritzsche

(56) References cited:
- EP-A- 1 332 681
- FR-A- 2 725 383
- FR-A- 2 847 145
- US-A- 5 852 965

## Description

The present invention relates to a domestic porridge making appliance, and more particularly to a domestic porridge making appliance in which a pulverizing means for pulverizing all kinds of grains like rice as one of main ingredients of the porridge together with various vegetables and a heating means for heating water and porridge ingredients are formed integrally with each other, thereby making it possible to prepare porridge in a more convenient way.

Generally, porridge is widely used for food use of patients who are ill or are in a recovering stage, for the health of old people or children, for stimulating people's appetite when they have a poor appetite, and sometimes for famine-relieving product at a time of want of food. From this viewpoint, therefore, the porridge is a basic form in cooking grains.

The kinds of porridge are rice porridge, rice and milk mixed porridge, nut porridge (porridge made of rice and pine nuts, sesame, walnuts, jujubes, dried chestnuts or the like), green beans or other porridge (porridge made of beans, red beans, mung beans, barley, unripe barley or the like), sea food porridge (porridge made of raw oysters, abalones, mussels, clams or the like), and meat porridge (porridge made of a variety of birds and meats or porridge made of beef and mussels).

In addition to the above mentioned kinds of porridge, there are porridges that are made of starch powder and Job's tears, lotus roots, water chestnuts, arrowroots, yarns or the like, which gives extraordinary tastes, diet effects, and medical effects. And there are porridges that are made of rice and various vegetables like bean sprouts, mallows, dried radish leaves or the like, which is cooked for stimulating poor appetites.

Referring to the process of making porridge as used conventionally, grains like rice are heated with an amount of water in the range of 6 to 7 times with respect to the rice amount until the grains become thick. For example, rice is put and cooked in water made by boiling and straining mung beans or red beans, rice is put and cooked in the water made by boiling and grinding beans, and rice powder is mixed with all kinds of nut powder and cooked with the addition of water. In case of meat porridge, also, meat is minced, seasoned and roasted and then, rice is put and cooked with the roasted meat, or rice is put and cooked in soup that is made after well boiling and cooked with the very small pieces of meat.

However, the conventional porridge making method requires a relatively long period of time in keeping the grains or vegetables soaked in water, and it is inconvenient to keep porridge stirred, while being boiled in order not to make it scorched. In addition, in the case where the time for making the grains soaked in water is erroneously manipulated or where the amount of water is erroneously put, there is a problem that the taste of the porridge is not good.

Document US-5852965 discloses a porridge making appliance according to the preamble of claim 1.

### Summary of the Invention

Accordingly, the present invention has been made in view of the above-mentioned problems occurring in the prior art.

An object of the present invention is to provide a domestic porridge making appliance and a method for making porridge by using the same that is capable of making porridge in more convenient and easier ways and substantially reducing the time required in making the porridge as compared with conventional methods.

According to a preferred embodiment of the present invention, a domestic porridge making appliance according to claim 1 is disclosed.

Further embodiments of the invention are disclosed in the dependent claims.

### Brief Description of the Invention

The above and other objects, features and advantages of the present invention will be apparent from the following detailed description of the preferred embodiments of the invention in conjunction with the accompanying drawings, in which:
FIG. 1 is a perspective view of the appliance according to the present invention;
FIG. 2 is an exploded perspective view of the appliance of the present invention;
FIG 3 is a front view of the top surface of the appliance according to the present invention.
FIG. 4 is a sectional view of the internal structure of the appliance according to the present invention.
FIG 5 is a sectional view of the opening-closing structure of the appliance according to the present invention.
FIG 6 is an enlarged perspective view of an opening-closing structure of the appliance according to the present invention.
FIG 7 is a block diagram of the configuration of the appliance according to the present invention.
FIG 8 is a flow-chart showing the operation order of the appliance according to the present invention.
FIG. 9 is a flowchart showing the process of making porridge by using the domestic porridge making appliance of this invention.

### Detailed Description of the Preferred Embodiment

Reference will now be made in detail to the preferred embodiments of the present invention, examples of which are illustrated in the accompanying drawings.

The terms used in the present invention are defined in accordance with the functions made in the present invention, which may be varied according to the intention or practices of those people who work in the art, and therefore, it should be understood that they do not limit the technical components of the present invention.

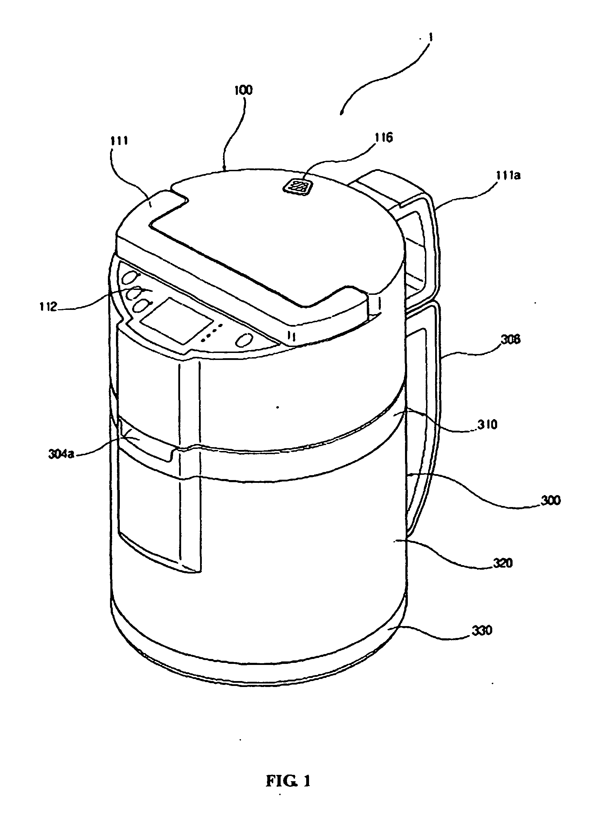

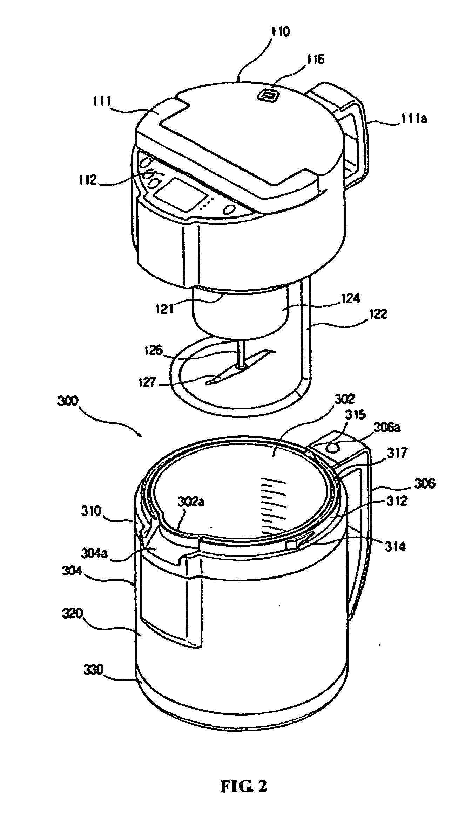

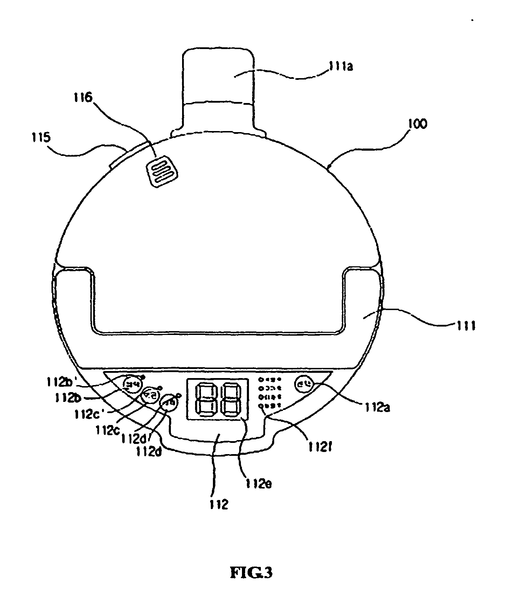

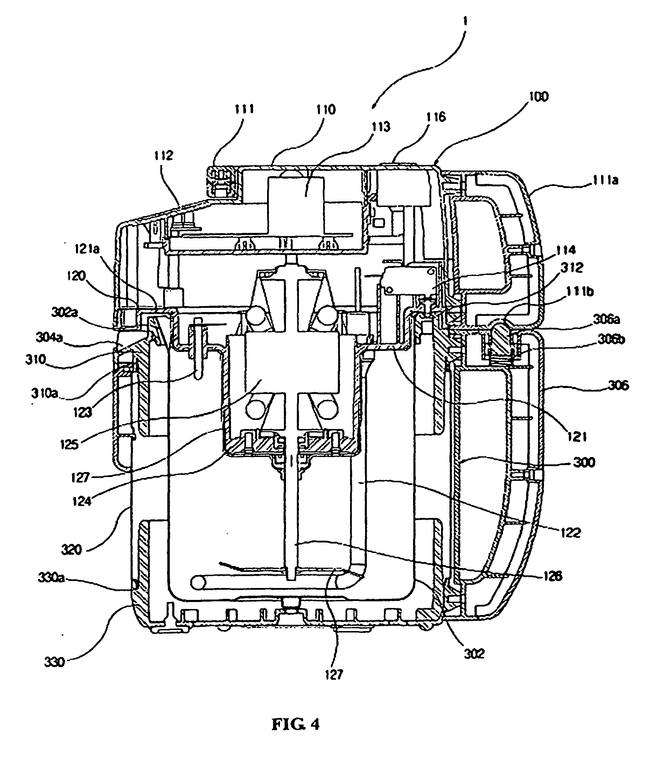

Referring to Fig 1 to Fig 4, as shown, a domestic porridge making appliance 1 according to the present invention includes a driving part 100 in which a motor 125 and a controller 113 are housed, for pulverizing porridge ingredients (e.g., grains like soaked rice, beans, vegetables, meat, sea food and so on) and a cooking vessel 300 into which the porridge ingredients and water are put and pulverized by the driving part 100 detachably mounted thereto.

The driving part 100 includes an upper housing 110 that has a generally a cylindrical shape of appearance opened on the bottom surface thereof with a stepped protrusion at the top side thereof, the upper housing having the controller 113 mounted at an inside thereof, and a lower housing 120 that is coupled to the opened portion of the upper housing 110 and has the motor 125 mounted downwardly thereto.

The upper housing 110 is provided with a handle grip 111, 111a for moving the driving part 100 and the cooking vessel 300 on the rear and the top surface thereof, and with the controller 113 in which a timer 113a is disposed for controlling each part of the domestic porridge making appliance 1 as time goes by, at the inside thereof. A power supply 115 is installed at the outer surface of the upper housing 100 for supplying power the motor 125 and the controller, and a wind outlet 116 may be formed at the top surface of the upper housing 100 to discharge heat from the controller 113 and the motor 125.

The handle grip 111 installed at the top surface of the upper housing 110 can be rotated for being folded in no use, and a hanging groove 111b may be formed at the lower part of the handle grip 111a placed at the upper housing 110 for inserting and fixing a hanging protrusion 305 formed at a handle grip 306 of the cooking vessel 300.

The control panel 112 includes function a selection button 112a for selecting grain porridge, meat porridge, vegetable porridge or sea food porridge, a reservation button 112b for reserving operation time, a heating button 112c for keeping the prepared porridge warm at a predetermined temperature, a cleaning button 112d for cleaning the appliance by itself after making the porridge, and emitting diodes 112b', 112c', 112d' for showing the setting of the buttons 112b, 112c, 112d, respectively may be installed at one side of the cleaning button 112d, and a display 112e on which time passed or time left during reservation, heating or making the porridge is displayed.

So as to prepare porridge, in the case where the selection button 112a is pressed by a user, light emitting diodes 112f indicating the grain porridge, the meat porridge, the vegetable porridge and the sea food porridge, and disposed at one side of the selection button 112a start to generate the light sequentially, and as the selection button 112a, the reservation button 112b, the heating button 112c and the cleaning button 112d are pressed by the user, the time passed or the time left is displayed on the display 112e.

The lower housing 120 has an upper side opened to correspond with the opened bottom side of the upper housing 110 and has a staged protrusion 121 formed at the lower side of the opened upper surface thereof, the staged protrusion 121 adapted to be coupled to a generally cylindrical motor mounting part 124 into which the motor 125 is disposed. On the outer surface of the staged protrusion 121 a ring type of insertion groove 121 a into which the upper part of the cooking vessel 300 is inserted to fix may be formed, while on the inner surface of the staged protrusion 121 a protrusion piece 128 which is installed with insertion into a protrusion step 314 formed at the outer surface of a insertion protrusion 312 that is formed at the upper part of the cooking vessel 300 may be formed, as described in the following.

The motor mounting part 124 has a rotating shaft 126 extended downwardly from the motor 125, and the rotating shaft 126 has a pulverizing blade 127 mounted at the end portion thereof wherein the pulverizing blade 127 serves to pulverize the porridge ingredients to a predetermined size. A heater 122 may be installed extendedly downwardly at one side of the staged protrusion 121 for boiling the porridge ingredients by means of heating water into the cooking vessel 300, and a sensor 123 may be installed at other side of the staged protrusion 121 to detect the amount of water, the temperature of the porridge ingredients and generation of bubble. An opening/closing switch 114 may be installed to detect the coupling condition of the cooking vessel 300 at the insertion groove 121a, and a protection cover 129 made of stainless material may be mounted at the outer surface of the staged protrusion 121 and the motor mounting part 124. The cooking vessel 300 takes a generally cylindrical shape and has an opened upper portion for mounting the driving part 100 therein. The cooking vessel 300 includes an inner tank 302 that is provided at the inside thereof, an outer tank 304 that is coupled to the outside of the inner tank 302 to thereby form an outer appearance thereof. In this case, the inner tank 302 is made of stainless metal or synthetic resin having excellent strength and heat-resistance properties with the top part open, the end of upper part of the inner tank 302 is closely contacted with the outer tank 304 to be fixed air-tightly, at on side of the open upper part a discharging groove 302a may be formed for discharging the contents of the inner tank 302, and the inner tank 302 may be spaced to form a volume part 303 for heat insulation. The upper surface of the outer tank 304 made from synthetic resin may be a counterpart to the lower part of the driving part 100, and the outer tank 304 comprises a upper outer tank 310 having a ring type of insertion protrusion 312, which is coupled with the insertion groove 121a placed at the lower surface of the driving part 100 by inserting, a middle outer tank 320 made from stainless material and connected to the lower part of the upper outer tank 320 forming the outer surface of the outer tank 304, and a lower outer tank 330 coupled to the lower part of the middle outer tank 320 to support the outer tank 304 as well as to stabilize the middle outer tank 320. Coupling grooves 310a, 330a are formed at the lower part of the upper outer tank 310 and the upper part of the lower outer tank 330 to insert the upper part and lower part of the middle outer tank 304, respectively, and a handle grip 306 may be secured to treat the cooking vessel 300 at the outer surface of the upper outer tank 310 and the lower outer tank 330. A hanging protrusion 306a may be installed over the handle grip 306 for avoiding the rotation of the driving part 100 around the cooking vessel 300 by being supported with a extension spring 306b wherein the hanging protrusion 306a is inserted into a hanging groove 111b formed at the lower surface of a handle grip 111a in the side surface of the driving part 100. A sensor part 315 may be provided at the upper surface of a insertion protrusion 312, which is formed on the upper surface of the upper outer tank 310, for operating the opening-closing switch 114 in manner to be adjacent to the opening-closing switch 114 placed on the lower surface of the driving part 100. At the both sides of the sensor 315 a dented groove 317 may be formed along the upper surface of the insertion protrusion 312 for discharging the vapor generated from boiling of the ingredients of the porridge contained into the inner tank 302 toward a discharging outlet 304a and for preventing the opening-closing switch from operating at a place other than at the place of sensor 315. On the periphery surface of the insertion protrusion 312 a protruded step 314 may be formed and a protrusion piece 128 formed at the inner surface of the insertion groove 121a in the lower housing 120 of the driving part 100 can be inserted. The combination of the driving part 100 and the cooking part 300 will be described in detail referring to the drawings in the following.

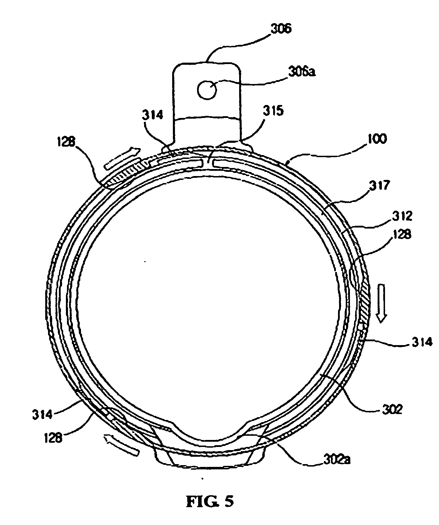

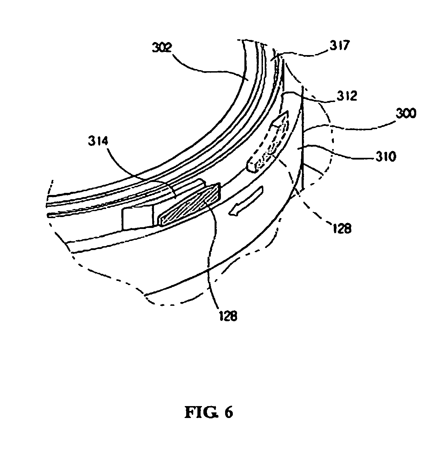

FIG 5 is a sectional view of the opening-closing structure of the appliance and FIG 6 is an enlarged perspective view of an opening-closing structure of the appliance according to the present invention.

As shown in FIG 5 and 6, a plurality of protrusion steps 314 may be formed the periphery surface of the insertion protrusion 312 formed on the upper surface of the upper outer tank 310 of the cooking vessel 300, and a plurality of protrusion pieces 128 may be formed to be inserted into the protrusion steps 314 at the inner surface of the insertion groove 121 a formed at the upper housing 120 of the driving part 100. At one side of the protrusion step 314 there may be provided with an insertion dented groove 314' for inserting a portion of the protrusion piece 128, and at one side of the protrusion step 314 there may be provided with a insertion dented groove 128' for inserting a portion of the protrusion step 314, and each insertion dented groove 314', 128' may be in a curved surface for ease insertion of the protrusion piece 128 and the protrusion step 314. If the driving part 100 is rotated after be secured at the upper part of the cooking vessel 300, the end part of the protrusion piece 128 formed at the driving part 100 can be inserted the insertion dented groove 314' of the protrusion step 314 placed at the cooking vessel 300 and at same time the end part of the protrusion step 314 can be inserted into the insertion dented groove 128' of the protrusion piece 128 to be pressurized by the curved surface formed at each insert dented groove 314', 128' and thereby the driving part 100 may be secured closely at the cooking vessel 300. And the driving part 100 can be coupled with the cooking vessel 300 with rotation and at the same time the opening-closing switch 114 installed at the lower part of the driving part 100 may contact the sensing part 315 placed at the upper of the cooking vessel 300 and thereby the state of combination of the driving part 100 may be transmitted to the controller 113, and thus the rotation of the driving part 100 can be avoided by inserting the hanging protrusion 306a supported with elasticity at the upper part of the handle grip 306 of the cooking vessel 300 into the hanging groove 111b formed at the lower part of the handle grip 111a.

The operation procedures of the appliance according to the present invention will be disclosed as examples in the following.

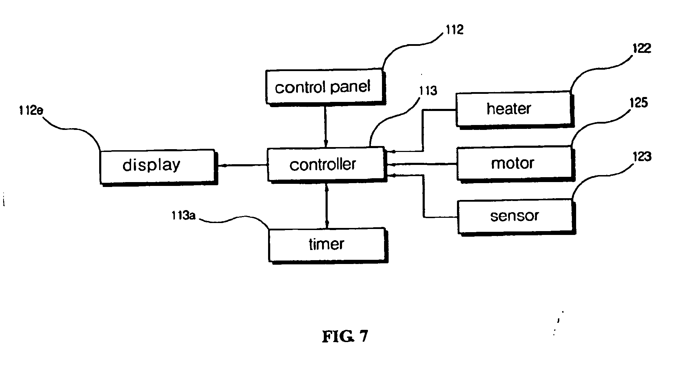

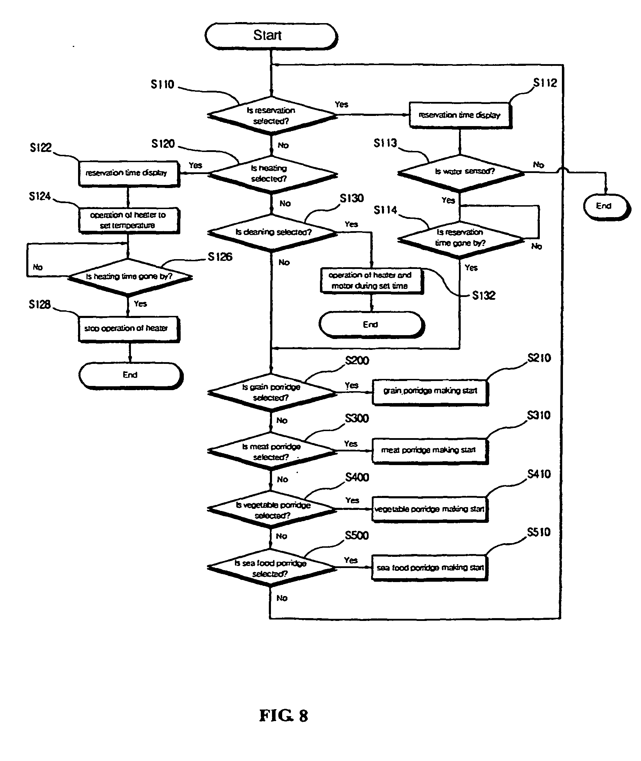

FIG 7 is a block diagram of the configuration, and FIG 8 is a flow-chart showing the operation order of the appliance according to the present invention.

First of all, porridge ingredients like soaked rice, other grains, meat, vegetables, sea foods and a predetermined amount of water are put in the inner tank 302 of the cooking vessel 300, and the driving part 100 is then mounted and coupled to the cooking vessel 300. And then the control panel 112 on the top surface of the driving part 100 is manipulated by a user for operating the porridge making appliance 1. To do this, any one of the selection button 112a, the reservation button 112b, the heating button 112c and the cleaning button 112d on the control panel 112 may be selected by the user. If the reservation button 112b and the selection button 112a are simultaneously pressed after the porridge ingredients and water are put in the cooking vessel 300 (at step S110), the controller 113 displays the time to start the operation on the display 112e and at that time, if the reservation button 112b is continuously pressed, it increases or decreases the expected time for the operation to thereby display the time finally set on the display 112e (at step S112). The controller 113 senses the presence and absence of water in the cooking vessel 300 and is returned to its initial step, if it is sensed that the water is not enough or no water is therein (at step S113). Then, if the reservation time elapses, the porridge making steps as will be discussed below are processed (S114). If the heating button 112c is pressed to keep the porridge after making warm in the cooking vessel 300 (at step S120), the controller 113 displays the heating time on the display 112e, and at that time, if the heating button 112c is continuously pressed, it increases or decreases the heating time for the porridge to thereby display the time finally set on the display 112e (at step S122). The controller 113 applies power to the heater 122 to operate the heater 122 at a predetermined set temperature (at step S126) such that the porridge in the cooking vessel 300 can be kept at the predetermined set temperature. After that, if the heating maintaining time elapses, the controller 113 cuts the power being supplied to the heater 122 to thereby stop the heating operation (at step S128). If the cleaning button 112d is pressed after water is poured into the cooking vessel 300 (at step S130), the controller 113 applies the power to the heater 122 to boil the water in the cooking vessel 300, and also applies the power to the motor 125 for a predetermined period of time to thereby rotate the pulverizing blade 127 (at step S132), with a result that as the pulverizing blade 127 is rotated, the water in the cooking vessel 300 is rotated to thereby make the pulverizing blade 127 and the cooking vessel 300 all cleaned. If the selection button 112a is pressed after the porridge ingredients and water are put in the cooking vessel 300, the light emitting diodes 112f indicating the grain porridge, the meat porridge, the vegetable porridge and the sea food porridge that are disposed at one side of the selection button 112a start to generate the light sequentially. At that time, if a desired porridge kind is selected, the controller 113 starts to carry out the operation of making the desired porridge (S200 to S510). In this case, the controller 113 sets the heating time and the pulverizing time by the porridge ingredients in accordance with the selected porridge kinds, and based upon the set time, it starts to pulverize and heat the porridge ingredients in the cooking vessel 300. After the selection of the desired porridge kind, the controller 113 senses the presence or absence of the water between the heater 122 and the pulverizing blade 127 of the driving part 100, and if the presence of water is sensed, it operates the heater 122 for the predetermined period of time to heat the water in the cooking vessel 300. At that time, the steam generated when the water is boiled is discharged through the steam discharging groove 302a on the cooking vessel 300. And, the controller 113 operates the motor 125 to thereby pulverize the porridge ingredients in the cooking vessel 300 by using the pulverizing blade 127 at the inside of the cooking vessel 300 and heats the pulverized mixture to thereby complete the desired porridge making operation. Hereinafter, an explanation of the process of making the porridge by using the domestic porridge making appliance of this invention will be given in detail.

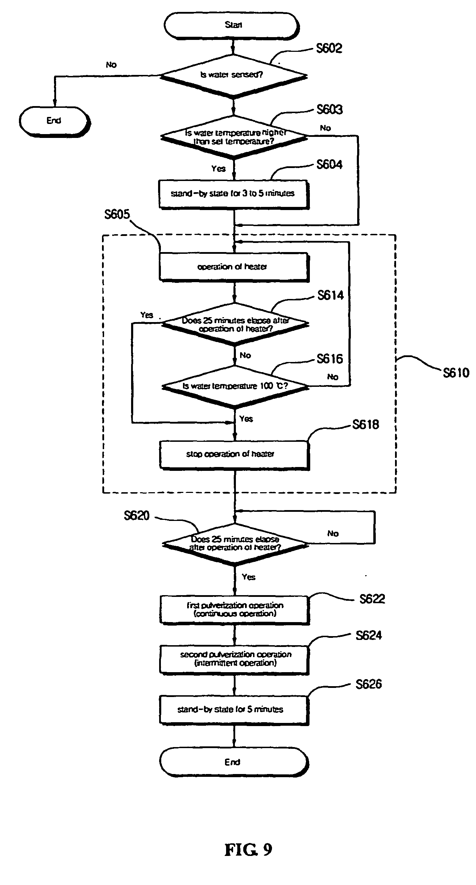

FIG. 9 is a flowchart showing the process of making porridge by using the domestic porridge making appliance of this invention.

In the case where the selection button 112a is pressed to select a desired porridge kind or where the reservation time elapses after the reservation button 112b is pressed, the controller 113 senses the presence or absence of water in the cooking vessel 300 (at step S602). If it is sensed that the water is not charged in the cooking vessel 300, at that time, the controller 113 generates a warning sound and is then returned to its initial state. On the other hand, if it is sensed that the water is charged in the cooking vessel 300, the controller 113 measures a temperature of the water (at step S603). In this case, if the temperature of the water is higher than a temperature set therein, the controller 113 is in a stand-by stage for time set therein such that the porridge ingredients are soaked in the water for the predetermined period of time (at step S604). Contrarily, if the temperature of the water is lower than the temperature set therein, the controller 113 applies the power supplied from the power supply 115 to the heater 122 to thereby operate the heater 122 (at step S605). As the heater 122 is operated, the water that is charged in the cooking vessel 300 is heated and boiled, which is sensed by means of the sensor 123. Thus, the temperature of water boiled is transmitted to the controller 113. At that time, the controller 113 starts to carry out a heating step (at step S610) wherein the operation time of the heater 122 is counted and at the same time the operation of the heater 122 is controlled. In this case, if the operation time of the heater 122 does not reach the time set therein, the controller 113 continuously applies the power to the heater 122 to keep the water boiled, and contrarily, if the operation time of the heater 122 reaches the time set therein, the controller 113 makes the heater 122 kept at a predetermined temperature for about 30 seconds and then cuts the power supply to the heater 122 to thereby stop operating the heater 122 (at step S618). On the other hand, if the temperature of water does not reach the set temperature, the controller 113 continuously applies the power to the heater 122 to thereby heat the water to the set temperature (at step S616). Even though the operation of the heater 122 stops by the above conditions (at step S618), if the operation time of the heater 112 is shorter than the set time, the stand-by state is kept until the operation time of the heater 122 reaches the set operation time (at step S620). After the heating step (at step S610), the controller 113 applies the power to the motor 125 to thereby carry out a first pulverization step for the porridge ingredients in the cooking vessel 300 by using the pulverizing blade 127 mounted on the rotating shaft 126 of the motor 125 at the inside of the cooking vessel 300 (at step S622). During the first pulverization step, the motor 125 is operated for about 20 seconds and has stand-by time for about 1 to 3 minutes. In this case, the operation time of the motor 125 is varied in accordance with the kinds of porridge. After the first pulverization step, the controller 113 carries out a second pulverization step where the motor 125 is operated for about 20 seconds and takes stand-by time for about 10 seconds, which is conducted repeatedly about 4 to 6 times (at step S624), and then, the controller 113 takes stand-by time for about 5 minutes (at step S626), thereby completing the operation of making the porridge. In this case, the heating step (step S610) and the first and second pulverization steps (steps S622 and S624) may be carried out reversely or repeatedly in accordance with the porridge ingredients.

As clearly appreciated from the foregoing, there is provided a domestic porridge making appliance and a method for making porridge by using the same wherein a pulverizing means for pulverizing all kinds of grains like rice as one of main ingredients of the porridge together with various vegetables and a heating means for heating water and porridge ingredients are formed integrally with each other, thereby making it possible to prepare the porridge in a more convenient way.

While the present invention has been described with reference to the particular illustrative embodiments, it is not to be restricted by the embodiments but only by the appended claims.

## Claims

1. A domestic porridge making appliance (1) in which the appliance comprises a cylindrical cooking vessel (300) into which predetermined amount of water and porridge ingredients can be supplied through an open upper side and a vessel handle grip (306) formed at one side thereof for moving the cooking vessel; a driving part (100) having a lower surface in shape of counterpart of the open upper side of the cooking vessel (300), a motor (125) disposed on the bottom surface thereof in such a manner as to be inserted into the inside of the cooking vessel (300) wherein the motor (125) has a pulverizing blade (127) connected to an end of rotating shaft (126) thereof, a heater (122) formed at the outside of the pulverizing blade (127) for heating the water within the cooking vessel (300), and a controller (113) formed at the inside thereof for controlling the motor (125) and the heater (122), **characterized in that** at the lower part of the peripheral surface of said driving part (100) a ring type of insertion groove (121a) is formed for inserting and thereby fixing the upper part of said cooking vessel (300) wherein at the inner surface of said insertion groove (121a) a plurality of protrusion pieces (126) are formed and each protrusion piece (128) has a curved surface, at the upper surface of said cooking vessel (300) a ring type of insertion protrusion (312) is formed wherein at the outer surface of said insertion protrusion (312) a plurality of protrusion steps (314) are formed and each step has a curved surface which contacts the curved surface of each of said protrusion piece (128) formed at the inner surface of said insertion groove (121a), and **in that** the appliance comprises an opening and closing switch (114) which contacts a sensor (315) installed at the upper part of said cooking vessel (300) when said driving part (100) is coupled with said cooking vessel (300).

2. The appliance according to claim 1, wherein the appliance further comprises a dented insertion groove for each said protrusion step (314) to be inserted, and a counterpart insertion groove for each said protrusion piece (128) to be inserted.

3. The appliance according to claim 1, the opening and closing switch (114) is installed at the insertion groove (121a) for detecting the combination of the driving part (100) and the cooking vessel (300).

4. The appliance according to claim 1the number of the protrusion pieces (128) and the protrusion steps (314) are three, respectively.

## Patentansprüche

1. Haushaltsgerät zur Zubereitung von Brei (1), bei dem das Gerät umfasst: ein zylindrisches Kochgefäß (300), in das eine vorgegebene Menge Wasser und Breizutaten durch eine offene Oberseite eingefüllt werden können, sowie einen Gefäßgriff (306), der an einer Seite davon ausgebildet ist, um das Kochgefäß zu bewegen; eine Antriebskomponente (100), deren Unterseite das Gegenstück zur offenen Oberseite des Kochgefäßes (300) darstellt; einen Motor (125), der an der Unterseite davon so angeordnet ist, dass er in das Kochgefäß (300) eingebracht wird, wobei der Motor (125) ein Zerkleinerungsmesser (127) besitzt, das mit einem Ende einer drehenden Welle (126) davon verbunden ist; eine Heizvorrichtung (122), die an der Außenseite des Zerkleinerungsmessers (127) ausgebildet ist, um das Wasser im Kochgefäß (300) zu erhitzen, und ein Steuergerät (113), das im Innern davon ausgebildet ist, um den Motor (125) und die Heizvorrichtung (122) zu steuern; **dadurch gekennzeichnet, dass**
am unteren Teil der Außenfläche der Antriebskomponente (100) eine ringförmige Einführnut (121a) ausgebildet ist zum Einführen und dabei Fixieren des oberen Teils des Kochgefäßes (300), wobei auf der Innenseite der genannten Einführnut (121 a) mehrere Vorsprungselemente (128) ausgebildet sind und jedes Vorsprungselement (128) eine gekrümmte Oberfläche besitzt; auf der Oberseite des Kochgefäßes (300) eine ringförmige Einführausbuchtung (312) ausgebildet ist, wobei an der Außenseite der Einführausbuchtung (312) mehrere Vorsprungsstufen (314) ausgebildet sind und jede Stufe eine gekrümmte Oberfläche besitzt, die in Kontakt mit der gekrümmten Oberfläche jedes der Vorsprungselemente (128), die auf der Innenseite der genannten Einführnut (121a) ausgebildet sind, gebracht wird; und dass das Gerät einen Auf-Zu-Schalter (114) umfasst, der in Kontakt mit einem am oberen Teil des Kochgefäßes (300) installierten Sensor (315) steht, wenn die Antriebskomponente (100) mit dem Kochgefäß (300) verbunden ist.

2. Gerät nach Anspruch 1, wobei das Gerät ferner eine gezahnte Einführnut für jede der einzuführenden Vorsprungsstufen (314) und eine Gegeneinführnut für jedes der einzuführenden Vorsprungselemente (128) umfasst.

3. Gerät nach Anspruch 1, wobei der Auf-Zu-Schalter (114) zur Erkennung der Verbindung von Antriebskomponente (100) und Kochgefäß (300) an der Einführnut (121a) installiert ist.

4. Das Gerät nach Anspruch 1, wobei drei Vorsprungselemente (128) bzw. Vorsprungsstufen (314) vorhanden sind.

## Revendications

1. Appareil ménager pour la préparation de bouillie (1), dans lequel l'appareil comprend un récipient de cuisson cylindrique (300) dans lequel une quantité prédéterminée d'eau et d'ingrédients de bouillie d'avoine peut être disposée à travers un côté supérieur ouvert, et une poignée de récipient (306) formée au niveau d'un côté de celui-ci pour déplacer le récipient de cuisson ; un mécanisme d'entraînement (100) ayant une surface inférieure en forme de contrepartie du côté supérieur ouvert du récipient de cuisson (300) ; un moteur (125) disposé sur la surface inférieure de celle-ci de manière à être inséré à l'intérieur du récipient de cuisson (300), dans lequel le moteur (125) comporte une lame de pulvérisation (127) raccordée à une extrémité de l'arbre rotatif (126) de celui-ci, un élément chauffant (122) formé à l'extérieur de la lame de pulvérisation (127) pour réchauffer l'eau à l'intérieur du récipient de cuisson (300), et une commande (113) formée à l'intérieur de celui-ci pour commander le moteur (126) et l'élément chauffant (122) ; **caractérisé en ce que**
au niveau de la partie inférieure de la surface périphérique dudit mécanisme d'entraînement (100) une rainure d'insertion du type en anneau (121a) est formée pour l'insertion et par ce biais la fixation de la partie supérieure dudit récipient de cuisson (300), dans lequel au niveau de la partie interne de ladite rainure d'insertion (121a) une pluralité de pièces en saillie (128) est formée et chaque saillie présente une surface incurvée, au niveau de la surface supérieure dudit récipient de cuisson (300) une saillie d'insertion du type en anneau (312) est formée, dans lequel au niveau de la surface externe de ladite saillie d'insertion (312) une pluralité de crans en saillie (314) est formée et chaque cran présente une surface curviligne qui entre en contact avec la surface curviligne de chacune desdites pièces en saillie (128) formées au niveau de la surface interne de ladite rainure d'insertion (121a), et **en ce que** l'appareil comprend un interrupteur de mise en marche et interruption (114) qui entre en contact avec un capteur (315) positionné au niveau de la partie supérieure dudit récipient de cuisson (300) lorsque ledit mécanisme d'entraînement (100) est couplé au dit récipient de cuisson (300).

2. Appareil selon la revendication 1, **caractérisé en ce que** l'appareil comprend en outre une rainure d'insertion dentée (128) pour l'insertion de chacun desdits crans en saillie (314), et une rainure d'insertion formant contrepartie pour l'insertion de chacune desdites pièces en saillie.

3. Appareil selon la revendication 1, **caractérisé en ce que** l'interrupteur de mise en marche et interruption (114) est positionné au niveau de la rainure d'insertion (121a) pour détecter la combinaison du mécanisme d'entraînement (100) et du récipient de cuisson (300).

4. Appareil selon la revendication 1, **caractérisé en ce que** le nombre de pièces en saillie (128) et de crans en saillie (314) est de trois, respectivement.
